# EUROPÄISCHE PATENTSCHRIFT

(11) **EP 3 084 500 B1**
(45) Veröffentlichungstag und Bekanntmachung des Hinweises auf die Patenterteilung: **30.10.2019**
(21) Anmeldenummer: 14821590.8
(22) Anmeldetag: 17.12.2014
(51) Int. Cl.: G02B 21/00

(54) **VERFAHREN ZUR SCANNING-MIKROSKOPIE UND SCANNING-MIKROSKOP**
METHOD FOR SCANNING MICROSCOPY AND SCANNING MICROSCOPE
PROCÉDÉ DE MICROSCOPIE À BALAYAGE ET MICROSCOPE À BALAYAGE

(30) Priorität: 17.12.2013 DE 102013021482
(43) Veröffentlichungstag der Anmeldung: 26.10.2016
(73) Patentinhaber: Carl Zeiss Microscopy GmbH, 07745 Jena (DE)
(72) Erfinder: EGGERT, Helge, 07743 Jena (DE); HILBERT, Michael, 07749 Jena (DE)
(74) Vertreter: Schiffer, Axel Martin
(86) Internationale Anmeldenummer: PCT/EP2014/078202
(87) Internationale Veröffentlichungsnummer: WO 2015/091634

(56) Entgegenhaltungen:
- EP-A1- 2 053 442
- WO-A1-2013/126999
- DE-A1-102008 034 137
- US-A1- 2005 012 993
- US-A1- 2011 278 470

## Beschreibung

Die vorliegende Erfindung betrifft in einem ersten Gesichtspunkt ein Verfahren zur Scanning-Mikroskopie nach dem Oberbegriff des Anspruchs 1. Außerdem bezieht sich die Erfindung auf ein Scanning-Mikroskop.

Bei einem gattungsgemäßen Verfahren wird eine Probe gleichzeitig mit mehreren Beleuchtungsspots eines Anregungslichts abgerastert und das von einem Probenort, der mit einem Beleuchtungsspot bestrahlt wird, abgestrahlte Licht wird unabhängig nachgewiesen von dem Licht, welches von einem anderen Probenort, der mit einem anderen Beleuchtungsspot beleuchtet wird, abgestrahlt wird. Aus dem für die verschiedenen Probenorte nachgewiesenen abgestrahlten Licht kann ein mikroskopisches Bild der Probe zusammengesetzt werden.

Ein gattungsgemäßes Scanning-Mikroskop weist folgende Bestandteile auf: eine Lichtquelle zum Aussenden von Anregungslicht, eine optische Trenneinrichtung zum räumlichen Auftrennen des Anregungslichts in mehrere Beleuchtungsstrahlbündel für eine Mehrzahl von Beleuchtungsspots, Optikmittel zum Leiten des Anregungslichts auf eine Probe und zum Leiten von von der Probe abgestrahltem Licht auf eine Detektoreinheit, eine Scaneinrichtung zum Abrastern der Probe mit der Mehrzahl von Beleuchtungsspots und die Detektoreinheit zum separaten Nachweisen des von den mit den verschiedenen Beleuchtungsspots beleuchteten Probenorten abgestrahlten Lichts.

Ein solches gattungsgemäßes Verfahren und ein solches gattungsgemäßes Scanning-Mikroskop sind beispielsweise beschrieben in US 6,028,306. Ein gattungsgemäßes Verfahren und ein Mikroskop, mit welchem dieses Verfahren durchgeführt werden kann, sind außerdem beschrieben in EP 2 053 442 A1.

Üblicherweise werden bei scannenden Mikroskopieverfahren, die mehr als eine Aufnahme benötigen, die Bildaufnahmen zeitlich nacheinander mit demselben Anregungsstrahl ausgeführt. Dabei werden entweder vollständige Bilder oder einzelne Linien nacheinander mit demselben Anregungsfleck oder Anregungsspot aufgenommen. Im Fall der sogenannten HDR-Mikroskopie (engl. High-Dynamic-Range-Mikroscopy) werden beispielsweise drei aufeinanderfolgende Bilder mit drei unterschiedlichen Anregungsintensitäten aufgenommen und anschließend miteinander verrechnet. Wegen der endlichen Aufnahmegeschwindigkeit wird dabei die zeitliche Auflösung im Vergleich zu einem Verfahren, bei dem nur ein Bild aufgenommen wird, verschlechtert oder, mit anderen Worten, die zeitlich auflösbare Probendynamik wird eingeschränkt.

Der Dynamikbereich heutiger Photodetektoren ist besonders für die Laser-Scanning-Mikroskopie häufig unzureichend, um gleichzeitig einerseits sehr feine und dunkle Strukturen und andererseits sehr helle Bildbereiche gleichermaßen empfindlich aufzulösen. In der Fluoreszenzmikroskopie sind daher Teile des Bilds häufig übersteuert und/oder andere Teile sind nicht mehr vom Hintergrundrauschen zu unterscheiden.

Weiterhin ist die Photoschädigung von Zellen und Gewebe durch intensive Beleuchtung bis heute einer der Schlüsselfaktoren, der maßgeblich die Anzahl der möglichen Bildaufnahmen von lebenden Zellen und damit die Messzeit limitiert.

Im Bereich der Laser-Scanning-Mikroskopie steht man somit oft an den Grenzen des Machbaren, wenn es um die Minimierung von Bleicheffekten und Optimierung der Detektoraussteuerung geht. Besonders gut werden diese Probleme zwar beim Prinzip der Photonenzählung adressiert, wobei hierbei die Vorteile eines hohen Signal-Rauschabstands jedoch mit vergleichsweise geringer Dynamik erkauft werden. Ab Zählraten von etwa 10 MHz wird die Zählung nichtlinear und ist ab etwa 30 MHz auch kaum noch zu korrigieren. Ein Benutzer muss deshalb ständig die Beleuchtung der Probe in einem optimalen Bereich halten, nicht zuletzt deshalb, um den unter maximaler Hochspannung betriebenen Photomultiplier vor Zerstörung zu schützen.

Zur Erweiterung des Dynamikbereichs stehen heute im Wesentlichen drei Techniken zur Verfügung. Zum einen können bessere Detektoren, beispielsweise also Kameras mit einem extrem hohen Dynamikbereich verwendet werden. Allerdings werden für die Mikroskopie heute Dynamiktiefen von 16 Bit bisher kaum erreicht. Die Verwendung hochsensitiver CCD-Kameras mit einem extrem großen Dynamikbereich kommt in der Laser-Scanning-Mikroskopie aufgrund von Streulicht kaum zum Einsatz.

Das Problem des unzureichenden Dynamikbereichs kann weiterhin in vergleichsweise einfacher Form mit mehreren Bildern umgangen werden, die bei unterschiedlicher Belichtung aufgenommen und anschließend verrechnet werden. Nachteil dieser Methode ist nicht nur die wesentlich größere Probenbelastung, sondern auch die benötigte Aufnahmezeit. Für viele Anwendungen, besonders bei Messungen an lebenden Zellen, ist dies nicht möglich oder jedenfalls nicht optimal.

Schließlich wurde ein Verfahren mit der Bezeichnung "Controlled Light Exposure Microscopy", auch als CLEM abgekürzt, in WO 2004/102249 A1 vorgeschlagen. Für die Laser-Scanning-Mikroskopie wird dabei während der scannenden Bildaufnahme in einer schnellen rückgekoppelten Regelung pixelgenau die Belichtungszeit geregelt, indem bei Erreichen eines bestimmten Schwellwerts im Detektor die Beleuchtung für das jeweilige Pixel ausgeschaltet und die Belichtung somit abgebrochen wird.

Für die sogenannte DI-Mikroskopie (engl. Dynamic-Illumination-Microscopy), gibt es bisher zwei Ansätze. Bei einer ersten Verfahrensvariante wird ein vollständiges Bild einer Probe oder eines Probenbereichs aufgenommen und auf Grundlage dieses Bilds wird anschließend für jedes einzelne Pixel eine spezifische Anregungsintensität berechnet. Mit dieser berechneten Intensität wird das betreffende Pixel dann in einer zweiten Aufnahme der Probe oder des Probenbereichs beleuchtet. Bei diesem Verfahren sind zwei Aufnahmen notwendig, weshalb auch hier die zeitliche Auflösung verschlechtert wird und dementsprechend die Möglichkeiten, rasch veränderliche Vorgänge in einer lebenden biologischen Probe zu beobachten, beschränkt werden.

Bei einer zweiten Ausführungsvariante der DI-Mikroskopie wird eine Intensität des von einem Probenort abgestrahlten Lichts direkt als Feedback für eine Regelung der auf eben diesen Probenort eingestrahlten Intensität verwendet. Hierzu ist eine sehr schnelle Regelung notwendig, insbesondere, um eine Sättigung der verwendeten Detektoren zu vermeiden. Dies ist beispielsweise beschrieben in DE 10 2008 034 137 A1.

Als eine Aufgabe der vorliegenden Erfindung kann angesehen werden, ein Verfahren zur Scanning-Mikroskopie und ein Scanning-Mikroskop anzugeben, die insbesondere für die HDR- und die DI-Mikroskopie vorteilhaft eingesetzt werden können.

Diese Aufgabe wird durch das Verfahren mit den Merkmalen des Anspruchs 1 und das Scanning-Mikroskop mit den Merkmalen des Anspruchs 5 gelöst.

Das Verfahren der oben genannten Art ist erfindungsgemäß dadurch weitergebildet, dass die Intensitäten der verschiedenen Beleuchtungsspots unabhängig voneinander eingestellt und die Beleuchtungsspots in einer Scanzeile hintereinander über die Probe geführt werden.

Das Mikroskop der oben genannten Art ist erfindungsgemäß dadurch weitergebildet, dass Einstellmittel zum unabhängigen Einstellen der Intensitäten der Beleuchtungsstrahlbündel vorhanden sind und die Trenneinrichtung und die Scaneinrichtung zum Abrastern der Probe dergestalt eingerichtet sind, dass die Beleuchtungsspots in einer Scanzeile hintereinander über die Probe geführt werden.

Als ein erster Grundgedanke der vorliegenden Erfindung kann angesehen werden, die Anregungs- oder Beleuchtungsspots nicht mehr in verschiedenen Zeilen über eine Probe oder einen Probenbereich zu führen, sondern diese in derselben Zeile hintereinander herlaufen zu lassen. Die getrennten Beleuchtungsspots werden dabei bereitgestellt mit Hilfe einer optischen Trenneinrichtung, die das Anregungslicht der Lichtquelle in mehrere Beleuchtungsstrahlbündel auftrennt. Wesentlich für die Erfindung ist außerdem, dass die von nebeneinanderliegenden, nämlich in derselben Scanzeile nebeneinanderliegenden Probenorten abgestrahlte Intensität jeweils unabhängig nachgewiesen wird.

Anregungslicht im Sinn der hier beschriebenen Erfindung ist elektromagnetische Strahlung, wobei insbesondere die infraroten, sichtbaren und ultravioletten Teile des Spektrums gemeint sind. Als Lichtquellen können prinzipiell alle Quellen verwendet werden, die die gewünschte elektromagnetische Strahlung in hinreichender Intensität bereitstellen. Üblicherweise werden hierzu Laser verwendet. Prinzipiell können aber auch Leuchtdioden oder andere Leuchtmittel eingesetzt werden.

Als Detektoren können prinzipiell alle Detektoren verwendet werden, die das von der Probe zurückgestrahlte Licht hinreichend effektiv und mit ausreichend gutem Signalzu Rausch-Verhältnis nachweisen. Grundsätzlich können hierzu auch Halbleiterdetektoren verwendet werden. Weil der Hauptanwendungsfall der vorliegenden Mikroskopietechniken die Fluoreszenz-Mikroskopie ist, wo in der Regel die Zählraten vergleichsweise klein sind, werden üblicherweise Photomultiplier verwendet.

Vorteilhafte Varianten des erfindungsgemäßen Verfahrens und bevorzugte Ausführungsbeispiele des erfindungsgemäßen Mikroskops werden im Folgenden, insbesondere im Zusammenhang mit den abhängigen Ansprüchen und den Figuren, beschrieben.

Erfindungsgemäß werden ein vorauslaufender Beleuchtungsspot, der auch als Pilotspot bezeichnet werden kann, und ein nachlaufender Beleuchtungsspot über die Probe geführt und eine für den vorauslaufenden Beleuchtungsspot gemessene Intensität des von einem Probenort zurückgestrahlten oder abgestrahlten Lichts wird verwendet zum Einstellen einer Intensität des nachlaufenden Beleuchtungsspots, wenn der nachlaufende Beleuchtungsspot auf diesen Probenort trifft.

Es werden demgemäß mindestens zwei Beleuchtungsspots verwendet, die in einem, insbesondere konstanten, Abstand über dieselbe Zeile der Probe gerastert oder gescannt werden. Die Helligkeit des zweiten, also des nachlaufenden Beleuchtungsspots wird dabei entsprechend der Grundidee der Dynamic-Illumination-Mikroskopie auf Grundlage des von dem ersten Beleuchtungsspot generierten Antwortsignals, also das von dem jeweiligen Probenort zurückgestrahlte Licht, der Probe geregelt. Für das mit dem zweiten Beleuchtungsspot aufgezeichnete Bild können dann alle Vorteile des DIM-Verfahrens erreicht werden. Beispielsweise können die Detektoren gezielt in einem Bereich betrieben werden, wo das Signal zu Rausch-Verhältnis besonders groß ist und außerdem kann ein Ausbleichen der Farbstoffe auf ein Minimum reduziert werden.

Besonders wichtig für diese Verfahrensvariante ist, dass die Intensität jedes einzelnen Beleuchtungsspots unabhängig eingestellt wird. Erfindungsgemäß sind deshalb Einstellmittel zum separaten Einstellen der Intensitäten der verschiedenen Beleuchtungsspots vorhanden.

Als Einstellmittel können insbesondere ansteuerbare Komponenten, beispielsweise akustooptische Elemente, wie AOMs, AODs und/oder AOTFs, verwendet werden. Bei einer weiteren besonders vorteilhaften Variante des erfindungsgemäßen Verfahrens werden mehr als zwei, insbesondere drei Beleuchtungsspots über die Probe geführt und die Intensität der Beleuchtungsspots steigt von einem vorauslaufenden oder ersten Beleuchtungsspot bis zu einem letzten Beleuchtungsspot an. Diese Verfahrensvariante ermöglicht die Aufnahme von mikroskopischen Bildern mit besonders hoher Intensitätsdynamik. Diese Technik wird, wie oben erläutert, als HDR-Mikroskopie bezeichnet.

Wichtig für alle erfindungsgemäßen Varianten ist die Möglichkeit, zwei oder mehrere Anregungsstrahlen zu erzeugen, die sich in einer rückwärtigen Brennebene eines verwendeten Objektivs im Winkel in der schnellen Scanrichtung unterscheiden. Das heißt mit anderen Worten, dass die Beleuchtungsspots in ein und derselben Scanzeile rasch aufeinander folgen. Die Intensitäten dieser Anregungsstrahlen, die auch als Beleuchtungsstrahlbündel bezeichnet werden, können erfindungsgemäß unabhängig voneinander eingestellt werden.

Die Intensitäten der verschiedenen Beleuchtungsspots können insbesondere für die HDR-Mikroskopie unterschiedlich und insbesondere fest eingestellt werden. Hierzu können als Einstellmittel zum separaten Einstellen der Intensitäten der verschiedenen Beleuchtungsspots Strahlteiler und/oder Strahlabschwächer verwendet werden.

Prinzipiell können zum Generieren der Mehrzahl von Beleuchtungsspots verschiedene Scaneinrichtungen und verschiedene Optiken verwendet werden. Besonders bevorzugt werden aber zum Leiten der verschiedenen Beleuchtungsspots auf die Probe jeweils dasselbe Mikroskopobjektiv und dieselbe Scaneinrichtung eingesetzt.

Grundsätzlich kann die Trenneinrichtung zum räumlichen Auftrennen des Anregungslichts in mehrere Beleuchtungsstrahlenbündel an jedem Ort des Anregungsstrahlengangs positioniert werden. Besonders bevorzugt ist die Trenneinrichtung im Strahlengang zwischen der Lichtquelle und der Scaneinrichtung angeordnet.

Die mit den mehreren Beleuchtungsspots erhaltenen Bilddaten können zweckmäßig zu einem gemeinsamen Bild verrechnet werden.

Wesentlich für die vorliegende Erfindung ist das Generieren von mehreren in einer Scanzeile nebeneinander liegenden Beleuchtungs- oder Anregungsspots, wobei das von den mit diesen Beleuchtungsspots beleuchteten Probenorten abgestrahlte Licht unabhängig voneinander detektiert werden kann. Insbesondere können erfindungsgemäß außerdem die verschiedenen Beleuchtungsspots in ihrer Intensität voneinander unabhängig eingestellt werden.

Für das Anwendungsbeispiel der HDR-Mikroskopie durch das Scannen von mehreren aufeinanderfolgenden Beleuchtungsspots in derselben Scanzeile einer Probe kann die Bildaufnahme insgesamt um einen der Anzahl der Beleuchtungsspots entsprechenden Faktor beschleunigt werden. Vorgänge in einer lebenden biologischen Probe können deshalb mit einer entsprechend größeren zeitlichen Dynamik beobachtet werden. Für solche Messungen muss für die Intensitätsverhältnisse der einzelnen Beleuchtungsspots nur gewährleistet sein, dass der vorauslaufende Strahl die geringste Intensität aufweist und die Intensitäten der in der Scanzeile folgenden Beleuchtungsstrahlen von Strahl zu Strahl größer werden. Dies kann beispielsweise durch Strahlteiler und Strahlabschwächer bewerkstelligt werden.

Für das Anwendungsbeispiel der Dynamic-Illumination-Mikroskopie wird der räumliche und damit auch zeitliche Abstand zwischen dem vorauslaufenden Beleuchtungsspot, der auch als Pilotspot oder Pilotstrahl bezeichnet wird, und dem nachlaufenden Beleuchtungsspot dazu genutzt, die für den zweiten Beleuchtungsspot einzustellende Intensität zu errechnen, wenn der zweite Beleuchtungsspot auf den entsprechenden Probenort trifft. Mit anderen Worten wird also auf Grundlage der Probenantwort eines bestimmten Probenorts nach Bestrahlung mit dem vorauslaufenden Beleuchtungsspot eine Intensität für den zweiten Beleuchtungsspot errechnet, wenn dieser auf den Probenort fällt.

Die Anforderung an die Schnelligkeit der Regelung kann deshalb mit dem erfindungsgemäßen Verfahren gesenkt werden und diese Anforderung ist jedenfalls kleiner als für eine Situation, bei der Beleuchtungsintensität noch während einer Verweildauer eines Beleuchtungsspots auf einem Probenort nachgeregelt werden soll. Bei einer Geschwindigkeit von x Pixeln/Mikrosekunde und einem Abstand der beiden Anregungsspots in der Scanzeile von y Pixeln wird eine Zeit, die ein Signal zum Durchlaufen der Regelstrecke brauchen darf, etwa y/x sein. Im Vergleich dazu beträgt diese Zeit bei einer direkten Regelung weniger als 1/x und ist demgemäß um einen Faktor y kleiner.

Das erfindungsgemäße Mikroskop, das zur Durchführung des erfindungsgemäßen Verfahrens geeignet ist, kann ein konfokales Mikroskop sein. Beispielsweise kann die Detektoreinheit konfokale Detektoren aufweisen. Als konfokal wird ein Detektor bezeichnet, wenn er selbst oder eine dem Detektor vorgeschaltete Blende in oder in der Nähe einer konfokalen Ebene positioniert ist. Als konfokale Ebene wird eine zu einer probenseitigen Brennebene des Mikroskopobjektivs optisch konjugierte Ebene des Detektionsstrahlengangs bezeichnet. Eine in einer konfokalen Ebene angeordneten Blende, beispielsweise vor einem Detektor, beschränkt die Lichtaufnahme des Detektors auf ein kleines Zielvolumen am Probenort. Entsprechend wird für eine konfokale Lichtquelle die Beleuchtung der Probe auf ein kleines Zielvolumen auf oder in der Probe beschränkt.

Weitere Vorteile und Merkmale des erfindungsgemäßen Verfahrens und des erfindungsgemäßen Scanning-Mikroskops werden im Folgenden mit Bezug auf die Figuren erläutert. Es zeigt:
- Figur 1:: Ein erstes Ausführungsbeispiel eines Scanning-Mikroskops (gehört nicht zur Erfindung) und
- Figur 2:: Ein Ausführungsbeispiel eines erfindungsgemäßen Scanning-Mikroskops.

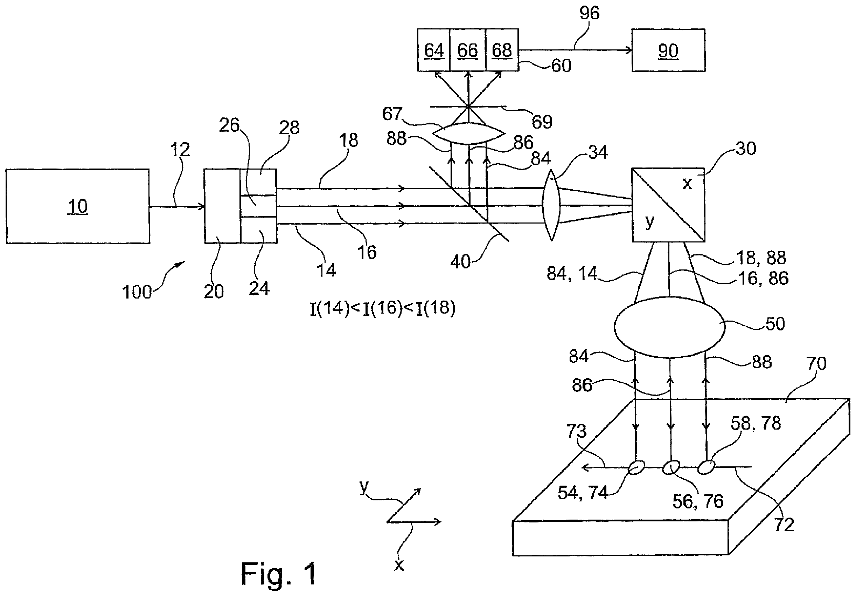

Ein erstes Verfahren und ein erstes Scanning-Mikroskop 100 werden mit Bezug auf Figur 1 erläutert. Als wesentliche Komponenten sind dort eine Lichtquelle 10, insbesondere ein Laser, zum Aussenden von Anregungslicht 12, Optikmittel 20, 30, 40, 50 sowie eine Detektoreinheit 60 gezeigt.

Als Teil der Optikmittel ist zunächst eine optische Trenneinrichtung 20 vorhanden, mit welcher das Anregungslicht 12 in eine Mehrzahl von Beleuchtungsstrahlbündel 14, 16, 18 aufgetrennt wird, wobei diese Beleuchtungsstrahlbündel 14, 16, 18 zum Generieren einer Mehrzahl von unterschiedlichen Beleuchtungsspots 54, 56, 58 auf einer Probe 70 dienen.

Weiterer Bestandteil der Optikmittel ist ein Hauptfarbteiler 40, durch den die Beleuchtungsstrahlbündel 14, 16, 18 hindurchtreten. Anschließend gelangen die Beleuchtungsstrahlbündel 14, 16, 18 über eine Optik 34 auf eine Scaneinrichtung 30, mit welcher sie erfindungsgemäß so über die Probe 70 gescannt oder gerastert werden, dass die Beleuchtungsspots 54, 56, 58, wie in Figur 1 schematisch dargestellt, in einer Scanzeile 72 nebeneinander oder, gleichbedeutend, nacheinander über die Probe 70 geführt werden. Die Scanrichtung ist in dem in Figur 1 gezeigten Beispiel die negative x-Richtung, was anhand des schematisch dargestellten Koordinatensystems ersichtlich ist.

Mit einem Mikroskopobjektiv 50 werden die Beleuchtungsspots 54, 56, 58 dann auf oder in die Probe fokussiert und beleuchten dort Probenorte 74, 76, 78, wie in Figur 1 dargestellt. In Reaktion auf das einfallende Anregungslicht wird von diesen Probenorten 74, 76, 78 jeweils Licht 84, 86, 88 abgestrahlt, das über dasselbe Mikroskopobjektiv 50 zurück auf den Scanner 30 und den Hauptfarbteiler 40 geleitet wird.

Für den wichtigen Anwendungsfall der Fluoreszenzmikroskopie weist das zurückgestrahlte Fluoreszenzlicht in der Regel größere Wellenlängen als das Anregungslicht auf. Der Hauptfarbteiler 40 ist so beschaffen, dass Licht dieser höheren Wellenlängen reflektiert wird. Das von den Probenorten 74, 76, 78 abgestrahlte Licht 84, 86, 88 wird demgemäß mit Hilfe der Optik 67 in Richtung einer konfokalen Blende 69 und der Detektoreinheit 60 weitergeleitet.

In der Detektoreinheit 60 ist für jeden der Beleuchtungsspots 54, 56, 58 ein separater Detektor 64, 66, 68 vorhanden, so dass das von den Beleuchtungsspots 54, 56, 58 generierte abgestrahlte Licht 84, 86, 88 der Probe 70 jeweils für jeden beleuchteten Probenort 74, 76, 78 separat nachgewiesen werden kann. Vor den Detektoren 64, 66, 68 ist im gezeigten Beispiel eine einzige konfokale Blende 69 positioniert, so dass die in Figur 1 dargestellte Anordnung 100 insgesamt zur Durchführung von konfokaler Mikroskopie geeignet ist. Prinzipiell kann auch vor jedem einzelnen Detektor 64, 66, 68 eine separate konfokale Blende angeordnet sein.

Wesentlich ist bei dem Ausführungsbeispiel aus Figur 1, dass die Probe 70 mit einer Mehrzahl von Beleuchtungsspots 54, 56, 58 gleichzeitig abgerastert wird, wobei diese Beleuchtungsspots 54, 56, 58 in ein und derselben Scanzeile 72 über die Probe geführt werden. Wichtig und wesentlich für die Erfindung ist außerdem, dass die Intensitäten der verschiedenen Beleuchtungsspots unabhängig voneinander eingestellt werden können. Im gezeigten Ausführungsbeispiel ist die Intensität I(54) des Beleuchtungsspots 54 kleiner ist als die Intensität I(56) des Beleuchtungsspots 56, die wiederum kleiner ist als die Intensität I(58) des Beleuchtungsspots 58.

Diese Größenrelationen sind in Figur 1 durch die Ungleichung I(14) < I(16) < I(18) wiedergegeben.

Durch diese Wahl der Intensitäten der einzelnen Beleuchtungsspots 54, 56, 58 kann ein Ausbleichen der Farbstoffe in vorteilhafter Weise auf ein Minimum reduziert werden und es können mikroskopische Bilder mit sehr großer Helligkeitsdynamik erreicht werden. Dieses Verfahren wird als HDR-Mikroskopie bezeichnet. Die geeignete Einstellung der Intensitäten erfolgt mit Hilfe von in der Figur 1 schematisch dargestellten Einstellmitteln 24, 26, 28, die der Trenneinrichtung 20 nachgeordnet sind und die Beleuchtungsstrahlbündel 14, 16, 18 auf die gewünschte Intensität abschwächen. Dies kann prinzipiell mit Hilfe von Stahlteilern oder Strahlabschwächern geschehen. Um den für die HDR-Mikroskopie gewünschten Vorteil der Reduzierung des Ausbleichens zu erreichen, ist es wichtig, dass der in Scanrichtung erste oder vorlaufende Beleuchtungsspot 54 die niedrigste und der letzte Beleuchtungsspot 58 die höchste Intensität aufweist. In Figur 1 ist die Scanrichtung entlang der Scanzeile 72 durch einen Pfeil 73 dargestellt.

Die Detektoreinheit 60 ist mit einer Steuer- und Auswerteeinheit 90 verbunden, was in Figur 1 durch einen Pfeil 96 schematisch dargestellt ist. In der Steuer- und Auswerteeinheit 90 können beispielsweise die von den Detektoren 64, 66, 68 gelieferten Messdaten zu einem einzigen Bild verrechnet werden. Prinzipiell kann diese Steuer- und Auswerteeinheit 90 wirkungsmäßig mit den Einstellmitteln 24, 26, 28, bei denen es sich insbesondere auch um ansteuerbare Komponenten, beispielsweise akustooptische Komponenten, handeln kann, verbunden sein.

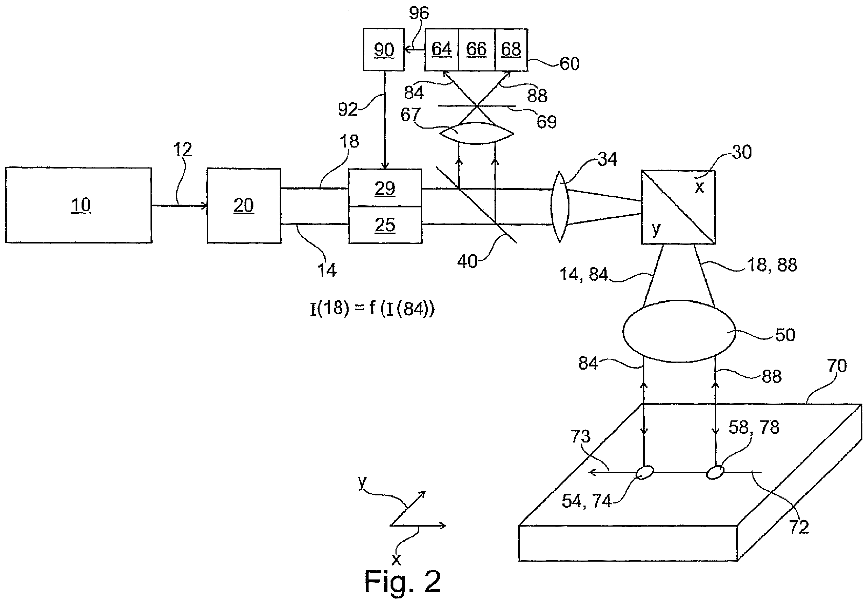

Ein weiteres Ausführungsbeispiel eines erfindungsgemäßen Scanning-Mikroskops, welches zur Durchführung von DI-Mikroskopie (engl. Dynamic-Illumination-Microscopy) geeignet ist, wird mit Bezug auf Figur 2 erläutert. Die wesentlichen Bestandteile des dort gezeigten Scanning-Mikroskops 100 entsprechen denjenigen des ersten, in Figur 1 gezeigten Beispiels. Generell sind gleiche oder gleich wirkende Bestandteile in den Figuren mit denselben Bezugszeichen gekennzeichnet.

Abweichend von der in Figur 1 gezeigten Variante eines Scanning-Mikroskops 100 werden bei Figur 2 nur zwei Beleuchtungsspots, nämlich ein vorauslaufender Beleuchtungsspot 54 und ein nachlaufender Beleuchtungsspot 58 in ein und derselben Scanzeile 72 über die Probe 70 geführt. Dementsprechend weist die Detektoreinheit 60 in diesem Beispiel nur zwei Detektoren 64, 68, mit einer davor positionierten konfokalen Blende 69 auf. Prinzipiell ist es, wie im Beispiel aus Figur 1, auch hier möglich, dass jeder Detektor eine eigene konfokale Blende und/oder eine eigene Detektoroptik aufweist.

Die Messinformation der Detektoreinheit 60, also die Messinformationen der Detektoren 64, 68 werden einer Steuer- und Auswerteeinheit 90 zugeführt, was in Figur 2 schematisch durch den Pfeil 96 dargestellt ist. Die von dem Detektor 64 gelieferte Messinformation entspricht dem von dem Probenort 74, der in der in Figur 2 dargestellten Situation von dem vorauslaufenden Beleuchtungsspot 54 beleuchtet wird, als Antwort oder Response auf diesen Beleuchtungsspot 54 ab- oder zurückgestrahlten Licht 84.

Die Steuer- und Auswerteeinheit 90 ist zum Liefern von Stellsignalen mit einem Einstellmittel 25 für das Beleuchtungsstrahlbündel 14 sowie einem Einstellmittel 29 für das Beleuchtungsstrahlbündel 18 wirkungsmäßig verbunden, was in Figur 2 durch den Pfeil 92 dargestellt ist. Auf Grundlage der von dem Detektor 64 für den Probenort 74 gelieferten Messinformation errechnet die Steuer- und Auswerteeinheit 90 eine Stellgröße für das Einstellmittel 29, mit welchem die Intensität des Beleuchtungsstrahlbündels eingestellt wird, wenn dieses Beleuchtungsstrahlbündel 18 als nachlaufender Beleuchtungsfleck auf den Probenort 74 trifft.

Bei den Einstellmitteln 25, 29 kann es sich bevorzugt um akustooptische Einstellmittel, wie AOM und AOTF, handeln. Mit Hilfe von AOTFs können prinzipiell auch die Intensitäten von mehreren Farben gezielt und rasch eingestellt werden. Im Vergleich zu bekannten Anordnungen zur DI-Mikroskopie kann mit dem hier beschriebenen Verfahren die Anforderung an die Schnelligkeit der Regelung reduziert werden, weil diese nicht mehr so rasch sein muss, dass die Regelung der Anregungsintensität noch während der Verweildauer des Anregungsspots auf einen bestimmten Probenort erfolgen muss. Andererseits ist die hier vorgeschlagene Lösung deutlich schneller als die Varianten, bei denen zunächst ein ganzes Bild einer Probe aufgenommen wird und anschließend die Probe noch einmal, dann mit den errechneten neuen punktspezifischen Intensitäten beaufschlagt wird.

Die grundlegende funktionale Abhängigkeit der Intensität I(18) des Beleuchtungsstrahlbündels 18 von der für das Licht 84 gemessenen Intensität ist in Figur 2 durch die Gleichung
I(18) = f(I(84)) wiedergegeben.

Mit der vorliegenden Erfindung wird ein Scanning-Mikroskop und ein Verfahren zur Scanning-Mikroskopie bereitgestellt, die insbesondere für die HDR-Mikroskopie und die DI-Mikroskopie erhebliche Verbesserungen und Vereinfachungen ermöglicht, die mit geringem apparativem Aufwand bewerkstelligt werden können.

Die in den Figuren 1 und 2 dargestellten optischen Anordnungen sind beispielhafter Natur. Bei Varianten hierzu könnte beispielsweise die Probe auch in Durchlicht beleuchtet werden. Außerdem kann prinzipiell die relative Anordnung der Probe und des Detektors zum Hauptfarbverteiler 40 so sein, dass die Beleuchtungsstrahlbündel 14, 16, 18 vom Hauptfarbteiler 40 reflektiert werden, das Fluoreszenzlicht aber durch den Hauptfarbteiler hindurchtritt.

### Bezugszeichenliste

10 Lichtquelle
12 Anregungslicht
14 Beleuchtungsstrahlbündel
16 Beleuchtungsstrahlbündel
18 Beleuchtungsstrahlbündel
20 optische Trenneinrichtung
24, 25, 26, 28, 29 Einstellmittel zum separaten Einstellen der Intensität
30 Scaneinrichtung
34 Optik
40 Hauptfarbteiler
50 Mikroskopobjektiv
54 Beleuchtungsspot
56 Beleuchtungsspot
58 Beleuchtungsspot
60 Detektoreinheit
64 Detektoreinheit
66 Detektoreinheit
67 Optik
68 Detektoreinheit
69 konfokale Blende
70 Probe
72 Scanzeile
73 Scanrichtung
74 Probenort
76 Probenort
78 Probenort
84 von Probenort 74 abgestrahltes Licht
86 von Probenort 76 abgestrahltes Licht
88 von Probenort 78 abgestrahltes Licht
20, 30, 40, 50 Optikmittel
90 Steuer- und Auswerteeinheit
92 Pfeil
96 Pfeil

## Patentansprüche

1. Verfahren zur Scanning-Mikroskopie,
bei dem eine Probe (70) gleichzeitig mit mehreren Beleuchtungsspots (54, 56, 58) eines Anregungslichts abgerastert wird,
bei dem das von einem Probenort (74), der mit einem Beleuchtungsspot (54) bestrahlt wird, abgestrahlte Licht (84) unabhängig nachgewiesen wird von dem Licht (86), welches von einem anderen Probenort (76), der mit einem anderen Beleuchtungsspot (76) beleuchtet wird, abgestrahlt wird, und
bei dem aus dem für die unterschiedlichen Probenorte nachgewiesenen abgestrahlten Licht ein mikroskopisches Bild der Probe (70) zusammensetzbar ist, wobei die Intensitäten der verschiedenen Beleuchtungsspots (54, 56, 58) unabhängig voneinander eingestellt werden und
wobei die Beleuchtungsspots (54, 56, 58) in einer Scanzeile (72) hintereinander über die Probe (70) geführt werden,
**dadurch gekennzeichnet,**
**dass** ein vorauslaufender Beleuchtungsspot (54) und ein nachlaufender Beleuchtungsspot (58) über die Probe (70) geführt werden und
**dass** eine für den vorauslaufenden Beleuchtungsspot (54) gemessene Intensität des von einem Probenort (74) abgestrahlten Lichts (84) verwendet wird zum Einstellen einer Intensität des nachlaufenden Beleuchtungsspots (58) wenn der nachlaufende Beleuchtungsspot (58) auf diesen Probenort (74) trifft.

2. Verfahren nach Anspruch 1,
**dadurch gekennzeichnet,**
**dass** mehr als zwei, insbesondere drei, Beleuchtungsspots (54, 56, 58) über die Probe (70) geführt werden.

3. Verfahren nach einem der Ansprüche 1 oder 2,
**dadurch gekennzeichnet,**
**dass** die für die mehreren Beleuchtungsspots (54, 56, 58) erhaltenen Messwerte zu einem gemeinsamen Bild verrechnet werden.

4. Verfahren nach einem der Ansprüche 1 bis 3,
**dadurch gekennzeichnet,**
**dass** zum Leiten der verschiedenen Beleuchtungsspots (54, 56, 58) auf die Probe (70) jeweils dasselbe Mikroskopobjektiv (50) und dieselbe Scaneinrichtung (30) verwendet werden.

5. Scanning-Mikroskop zum Durchführen des Verfahrens nach einem der Ansprüche 1 bis 4,
mit einer Lichtquelle (10) zum Aussenden von Anregungslicht (12),
mit einer optischen Trenneinrichtung (20) zum räumlichen Auftrennen des Anregungslichts (12) in mehrere Beleuchtungsstrahlbündel (14, 16, 18) für eine Mehrzahl von Beleuchtungsspots (54, 56, 58),
mit Optikmitteln (20, 30, 40, 50) zum Leiten des Anregungslichts (12) auf eine Probe (70) und zum Leiten von von der Probe (70) abgestrahltem Licht (84, 86, 88) auf eine Detektoreinheit (60),
mit einer Scaneinrichtung (30) zum Abrastern der Probe (70) mit der Mehrzahl von Beleuchtungsspots (54, 56, 58) und
mit der Detektoreinheit (60) zum separaten Nachweisen des von den mit den verschiedenen Beleuchtungsspots (54, 56, 58) beleuchteten Probenorten (74, 76, 78) abgestrahlten Lichts (84, 86, 88),
wobei Einstellmittel (24, 26, 28; 25, 29) zum unabhängigen Einstellen der Intensitäten der Beleuchtungsstrahlbündel (14, 16, 18) vorhanden sind und
wobei die Trenneinrichtung (20) und die Scaneinrichtung (30) zum Abrastern der Probe (70) dergestalt eingerichtet sind, dass die Beleuchtungsspots (54, 56, 58) in einer Scanzeile (72) hintereinander über die Probe (70) geführt werden.

6. Scanning-Mikroskop nach Anspruch 5,
**dadurch gekennzeichnet,**
**dass** die Trenneinrichtung (20) im Strahlengang zwischen der Lichtquelle (10) und der Scaneinrichtung (30) angeordnet ist.

7. Scanning-Mikroskop nach Anspruch 5 oder 6,
**dadurch gekennzeichnet,**
**dass** als Einstellmittel (24, 26, 28) Strahlteiler und/oder Strahlabschwächer vorhanden sind.

8. Scanning-Mikroskop nach einem der Ansprüche 5 bis 7,
**dadurch gekennzeichnet,**
**dass** als Einstellmittel (25, 29) ansteuerbare Komponenten, insbesondere akustooptische Komponenten wie AOTF, AOM, AOD, vorhanden sind.

9. Scanning-Mikroskop nach einem der Ansprüche 5 bis 8,
welches ein konfokales Scanning-Mikroskop ist.

## Claims

1. Method for scanning microscopy,
wherein a sample (70) is scanned simultaneously with a plurality of illumination spots (54, 56, 58) of excitation light,
wherein the light (84) emitted by a sample location (74) being irradiated by an illumination spot (54) is being detected independently from the light (86) which is emitted by another sample location (76) being illuminated by another illumination spot (56), and
wherein a microscopic image of the sample (70) can be put together from the emitted light detected for the different locations of the sample (70), wherein the intensities of the different illumination spots (54, 56, 58) are being adjusted independently from each other and
wherein the illumination spots (54, 56, 58) are being guided over the sample (70) in one scan line behind each other,
**characterized in that**
a leading illumination spot (54) and a following illumination spot (58) are being guided over the sample (70) and
that an intensity of the light (84) emitted from a sample location (74) measured for the leading illumination spot (54) is being used for adjusting an intensity of the following illumination spot (58) when the following illumination spot (58) hits this sample location (74).

2. Method according to claim 1,
**characterized in**
**that** more than two, in particular three, illumination spots (54, 56, 58) are being guided over the sample (70).

3. Method according to 1 of the claims 1 or 2,
**characterized in**
**that** the measurement values obtained for the plurality of illumination spot (54, 56, 58) are being processed to one common image.

4. Method according to 1 of the claims 1 to 3,
**characterized in**
**that** for guiding of the separate illumination spots (54, 56, 58) on the sample (70), in each case, the same microscope objective (50) and the same scanning device (30) is being used.

5. Scanning microscope for carrying out the method according to one of the claims 1 to 4,
with a light source (10) for transmitting excitation light (12),
with an optical separation device (20) for spatially separating the excitation light (12) into a plurality of excitation beams (14, 16, 18) for a plurality of illumination spots (54, 56, 58),
with optical means (20, 30, 40, 50) for guiding the excitation light (12) onto a sample (70) and for guiding light (84, 86, 88) emitted by the sample (70) onto a detection unit (60),
with a scanning device (30) for scanning the sample (70) with the plurality of illumination spots (54, 56, 58) and
with the detection unit (60) for separately detecting the light (84, 86, 88) emitted by the sample locations (74, 76, 78) illuminated by the different illumination spots (54, 56, 58),
wherein adjusting means (24, 26, 28; 25, 29) are present for independently adjusting of the intensities of the illumination beams (15, 16, 18), and
wherein the separation device (20) and the scanning device (30) are configured for the scanning of the sample (70) such that the illumination spots (54, 56, 58) are being guided in one scan line (72) after each other over the sample.

6. Scanning microscope according to claim 5,
**characterized in**
**that** the separation device (20) is arranged in the beam path between the light source (10) and the scanning device (30).

7. Scanning microscope according to claim 5 or 6,
**characterized in**
**that** as adjusting means (24, 26, 28) beam splitters and/or beam attenuators are present.

8. Scanning microscope according to 1 of the claims 5 to 7,
**characterized in**
**that** as adjusting means (24, 26, 28) controllable components, in particular acousto-optic components such as AOTF, AOM, AOD, are present.

9. Scanning microscope according to 1 of the claims 5 to 8,
which is a confocal scanning microscope.

## Revendications

1. Procédé de microscopie à balayage,
selon lequel un échantillon (70) est balayé simultanément au moyen de plusieurs spots d'éclairage (54, 56, 58) d'une lumière d'excitation,
selon lequel la lumière (84) émise par un emplacement d'échantillon (74), qui est exposé à un rayonnement au moyen d'un spot d'éclairage (54), est détectée indépendamment de la lumière (86) émise par un autre emplacement d'échantillon (76), qui est éclairé au moyen d'un autre spot d'éclairage (76), et
selon lequel, à partir de la lumière émise détectée pour les différents emplacements d'échantillon, une image microscopique de l'échantillon (70) peut être recomposée,
dans lequel les intensités des différents spots d'éclairage (54, 56, 58) sont réglées indépendamment les unes des autres et
dans lequel les spots d'éclairage (54, 56, 58) sont guidés les uns derrière les autres en une ligne de balayage (72) sur l'échantillon (70),
**caractérisé**
**en ce qu'**un spot d'éclairage avant (54) et un spot d'éclairage arrière (58) sont guidés sur l'échantillon (70) et
**en ce qu'**une intensité, mesurée pour le spot d'éclairage avant (54), de la lumière (84) émise par un emplacement d'échantillon (74) est utilisée pour régler une intensité du spot d'éclairage arrière (58) lorsque le spot d'éclairage arrière (58) rencontre cet emplacement d'échantillon (74).

2. Procédé selon la revendication 1,
**caractérisé**
**en ce que** plus de deux, en particulier trois spots d'éclairage (54, 56, 58) sont guidés sur l'échantillon (70).

3. Procédé selon l'une quelconque des revendications 1 ou 2,
**caractérisé**
**en ce que** les valeurs de mesure obtenues pour les différents spots d'éclairage (54, 56, 58) sont combinées de manière à obtenir une image commune.

4. Procédé selon l'une quelconque des revendications 1 à 3,
**caractérisé**
**en ce que** respectivement le même objectif de microscope (50) et le même dispositif de balayage (30) sont utilisés pour guider les différents spots d'éclairage (54, 56, 58) sur l'échantillon (70).

5. Microscope à balayage pour la mise en œuvre du procédé selon l'une quelconque des revendications 1 à 4,
pourvu d'une source de lumière (10) destinée à émettre une lumière d'excitation (12),
d'un dispositif de séparation optique (20) destiné à séparer spatialement la lumière d'excitation (12) en plusieurs faisceaux d'éclairage (14, 16, 18) pour une pluralité de spots d'éclairage (54, 56, 58),
de moyens optiques (20, 30, 40, 50) destinés à guider la lumière d'excitation (12) sur un échantillon (70) et à guider la lumière (84, 86, 88) émise par l'échantillon (70) sur une unité de détection (60),
d'un dispositif de balayage (30) destiné à balayer l'échantillon (70) au moyen de la pluralité de spots d'éclairage (54, 56, 58) et
de l'unité de détection (60) destinée à détecter de manière séparée la lumière (84, 86, 88) émise par les emplacements d'échantillon (74, 76, 78) éclairés au moyen des différents spots d'éclairage (54, 56, 58),
dans lequel des moyens de réglage (24, 26, 28 ; 25, 29) destinés au réglage indépendant des intensités des faisceaux d'éclairage (14, 16, 18) sont présents et
dans lequel le dispositif de séparation (20) et le dispositif de balayage (30) sont conçus pour balayer l'échantillon (70) de telle sorte que les spots d'éclairage (54, 56, 58) sont guidés les uns derrière les autres en une ligne de balayage (72) sur l'échantillon (70).

6. Microscope à balayage selon la revendication 5,
**caractérisé**
**en ce que** le dispositif de séparation (20) est agencé dans le chemin optique entre la source de lumière (10) et le dispositif de balayage (30).

7. Microscope à balayage selon la revendication 5 ou 6,
**caractérisé**
**en ce que** des séparateurs de faisceaux et/ou atténuateurs de faisceaux sont présents comme moyens de réglage (24, 26, 28).

8. Microscope à balayage selon l'une quelconque des revendications 5 à 7,
**caractérisé**
**en ce que** des composants pouvant être commandés, en particulier des composants acousto-optiques tels que des filtres acousto-optiques, des modulateurs acousto-optiques, des déflecteurs acousto-optiques sont présents en tant que moyens de réglage (25, 29).

9. Microscope à balayage selon l'une quelconque des revendications 5 à 8, lequel est un microscope à balayage confocal.
